# EUROPEAN PATENT APPLICATION

(11) **EP 1 782 687 A1**
(43) Date of publication of application: **09.05.2007**
(21) Application number: 06123543.8
(22) Date of filing: 06.11.2006
(51) Int. Cl.: A01K 97/12

(54) **Fish bite alarm**

(30) Priority: 04.11.2005 GB 0522574
(71) Applicant: Brown, Mark, 39 Westbrooke Road Welling DA16 1PS, Kent (GB)
(72) Inventor: Brown, Mark, 39 Westbrooke Road Welling DA16 1PS, Kent (GB)
(74) Representative: Derry, Paul Stefan

(57) **Abstract**

A fish bite alarm 10 also comprises a processor 15, a memory 16, a short-range communications receiver 19 and an audible alarm indicator 21. When the communications receiver 19 is activated, the fish bite alarm 10 is able to receive alarm message data. The communications receiver 19 is for example an infrared transceiver, a USB port, a Bluetooth transceiver. This allows a ringtone to be transferred directly from a user's mobile telephone to the fish bite alarm 10. When a fish bite is detected, the processor 15 uses sound data from a sound data storage volume 23 of the memory 16 to supply signals to the alarm driver 20 such that it causes the audible alarm indicator 21 to emit the melody or other audio sequence that is represented by the alarm message data. This allows generation of an audio alarm which is fed into the bite alarm by a user, using their mobile phone or their PC for instance, so that the user can more easily distinguish their bite alarm from a bite alarm associated with a fishing rod of a neighbouring angler.

## Description

The invention relates to a fish bite alarm.

Fish bite alarms are well known. A fish bite alarm comprises an electronic device including an input transducer which is held in contact with a fishing line associated with a fishing rod. When a fish takes bait from an end of the fishing line, vibrations are sent along the fishing line to the input transducer, and an output of the input transducer is fed to decision circuitry which determines whether to issue an alarm. On a positive decision, an audible alarm is generated by an output sound transducer. It is known for a potentiometer to be provided and for operation of this by a user to adjust the volume of the audible alarm.

It is relatively common for an angler to run plural fishing rods at a time. In this case, bite alarms are particularly useful since without them it can be difficult for an angler to monitor plural rods simultaneously. However, particularly when plural anglers use rods equipped with bite alarms in close proximity to one another, it can be difficult to determine which angler and/or which rod is associated with a bite alarm which has been activated.

Some bite alarms are equipped with alarm pitch controls, which allow adjustment of the pitch of the audible alarm within a range of frequencies. This can make it easier for an angler to determine whether an alarm which is sounding is associated with one of their rods or is associated with a rod of a neighbouring angler. However, the inventor perceives that anglers nonetheless pay attention to the bite alarms of other anglers unnecessarily and unintentionally. The inventor considers also that this effect is worsened when two or more alarms sound simultaneously, since such makes identification of a particular audio alarm even more difficult.

The invention is concerned with mitigating the above-mentioned problems.

According to the invention, there is provided a fish bite alarm comprising:
a fish bite detector operable to produce a fish bite detection signal when a fish bite is detected; and
an audible alarm indicator;
the fish bite alarm being characterised by:
a memory;
a communications receiver, for receiving alarm message data;
means for storing in the memory sound data the same as or derived from the alarm message data; and
means responsive to production of the fish bite detection signal for operating the audible alarm indicator to generate an audio alarm using the sound data stored in the memory.

Using the invention, it is possible to provide a bite alarm with the ability to generate an audio alarm which is fed into the bite alarm by a user, using their mobile phone or their PC for instance, so that the user can more easily distinguish their bite alarm from a bite alarm associated with a fishing rod of a neighbouring angler.

Advantageously, tone properties of the audio alarm are determined only by the sound data stored in the memory. In this way, the fish bite alarm does not need to be provided with controls through which a user can adjust the tone of the audio alarm. Since the audio alarm is very likely to sound very different to other bite alarms, the audio alarm can be distinguished easily from others even without requiring a tone control to be provided on the bite alarm. The absence of the tone control can result in reduced manufacturing costs, and in a reduced number of mechanical components (e.g. a switch). Since mechanical components are more prone than electronic components to failure with repeated use, the absence of a tone control can result in an increased average time-to-failure.

Further advantageously, properties of the audio alarm are determined only by the sound data stored in the memory. Omitting a tone control and also a volume control from the bite alarm results in the advantages discussed above with respect to the absence of a tone control and reduces further the count of mechanical components, thereby further increasing the average time-to-failure and reducing manufacturing cost.

To advantage, the audible alarm indicator is the sole output transducer of the fish bite alarm. Another way to describe this is to say that a processor of the fish bite alarm has a sole operative connection to a device driver, which is a device driver for the audible alarm indicator. The absence of a display is not problematic since the operating functions of the fish bite alarm can be indicated in other ways or the requirement for indication can be avoided.

Preferably the means for storing in the memory is arranged when alarm message data is received to overwrite or delete sound data pre-existing in the memory. Since this allows only one item of sound data to be stored in the memory at a given time, it is possible to construct the fish bite alarm without any means allowing a user to select between plural sound data items stored in the memory. Since the provision of such selection means would normally involve a control input and an output, e.g. a display, allowing only a single item of sound data can result in fewer components being required, and thus lower manufacturing costs. Allowing only a single item of sound data to be stored in the memory also can allow the memory to be of a relatively small size, and thus relatively inexpensive to manufacture.

Optionally, the fish bite alarm is responsive to receiving alarm message data for operating the audible alarm indicator to generate an audio alarm using the sound data stored in the memory. This provides a convenient way in which a user can determine that the alarm message data has been correctly received by the fish bite alarm and is able to be properly handled thereby. This can be achieved without requiring the presence of a display of output transducer other than the audible alarm indicator.

Advantageously, the communications receiver is arranged to be operated only for a predetermined duration following the fish bite alarm being switched-on. This can allow a user to utilise the communications receiver without needing the communications receiver to be continuously powered (at least whilst the fish bite alarm is switched-on), which has positive power-saving implications, nor without requiring there to be an input specifically for allowing a user to provide the fish bite alarm with alarm message data, with hardware saving implications. The predetermined duration may take any suitable value, for instance a value between 15 seconds and 120 seconds.

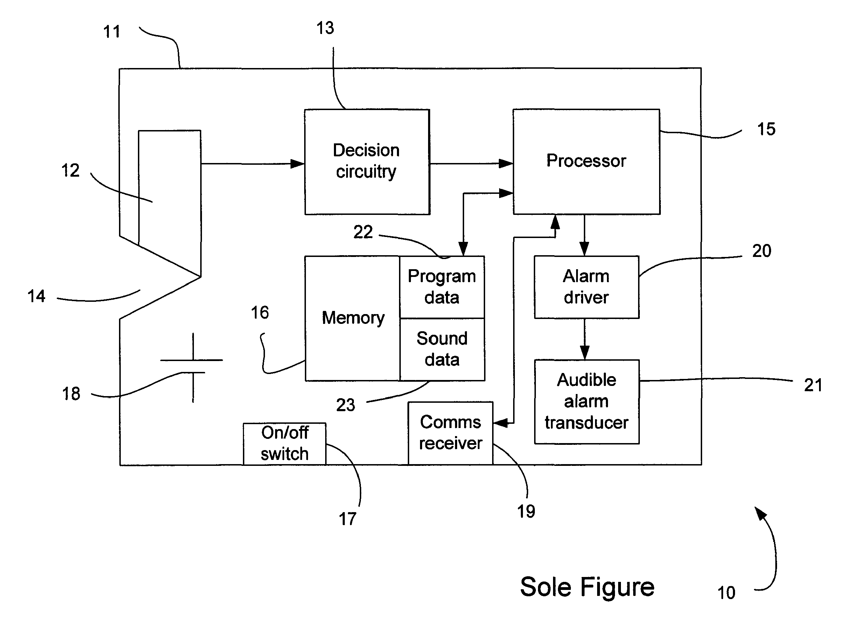

Embodiments of the present invention will now be described by way if example only with reference to the accompanying sole Figure which is a schematic diagram illustrating a fish bite alarm according to the invention and the arrangement of internal components thereof.

Referring to the Figure, a fish bite alarm 10 according to the invention comprises generally a housing 11, an input transducer 12 and decision circuitry 13. The housing may take any suitable form, and may be for instance a plastic generally cuboid box approximately 8 x 4 x 3 cm. The form of the housing is not relevant to the invention. At one end, a notch 14 is formed in the housing 11. The input transducer is mechanically connected to the housing in the region of the notch 14. In this way, a fishing line (not shown) can be located in the notch 14 and thereby be mechanically connected to the input transducer 12. Vibrations of the fishing line then are detected by the input transducer 12, and a decision as to whether the vibrations are representative of a fish bite is made by the decision circuitry 13, which provides a fish bite detection signal at an output thereof on a positive determination.

The fish bite alarm 10 also comprises a processor 15, a memory 16, an on-off switch 17, a cell or battery 18, a communications receiver 19, an alarm driver 20 and an audible alarm indicator 21. The processor 15 is coupled to receive fish bite detection signals from the decision circuitry 13. The output of the decision circuitry may be connected to an interrupt input of the processor 15. The processor 15 is coupled also to the memory 16, to the communications receiver 19 and to the alarm driver 20. The cell or battery 18 is connected in a circuit with the on-off switch 17 so that power is supplied only when the on-off switch 17 is in an 'on' position. When in this position, the cell or battery 18 provides power to the memory 16, the alarm driver 20, the decision circuitry 13 and the processor 15. Power is provided to the communications receiver 19 by the cell or battery 18 under control of the processor 15.

The audible alarm indicator 21 is the sole output transducer of the fish bite alarm 10. In another embodiment, the fish bite alarm 10 may also be provided with a LED (not shown) or other single element display. In other, more complex embodiments, an LCD or other multi-element display may be present.

The memory 16 is a non-volatile memory. It is provided with an application program storage volume 22 in which is stored one or more application programs, which are utilised by the processor 15 in the operation thereof. The memory 16 also is provided with sound data storage volume 23 which is set aside for the storage of sound data.

When the fish bite alarm 10 is switched-on by a user, by way of operation of the on-off switch 17, power is provided to the relevant components. On receiving power after a period of switch-off, the processor 15 reads application program data from the application program storage volume 22 of the memory 16, and uses this to initialise the fish bite alarm 10.

The sound data storage volume 23 is provided with an item of sound data prior to sale of the fish bite alarm 10. The item of sound data can be considered to define an audio sequence, such as a melody or audio sample. In this way, the fish bite alarm 10 can be considered to be pre-loaded with a melody or other audio sequence.

Following initialisation of the fish bite alarm 10 after switch-on, it is ready to be implemented. The fish bite alarm 10 then is associated with a fishing line by the user. When the input transducer 12 produces signals which the decision circuitry 13 determines are representative of a fish bite, the decision circuitry provides a fish bite detection signal to the processor 15. Reception of this signal at the processor 15 causes it to execute a routine forming part of the application program data. This routine causes the processor 15 to read the sound data from the sound data storage volume 23 of the memory 16 and to use the data according to instructions forming part of the application program data to supply signals to the alarm driver 20 such that it causes the audible alarm indicator 21 to emit the melody or other audio sequence that is represented by the sound data. Thus, detection of a fish bite results in the production of an audio alarm derived from the sound data stored in the sound data storage volume 23 of the memory 16. Moreover, as is explained below, the sound data is replacable by a user so that a different audio sequence can be produced when a fish bite is detected.

The application program data includes instructions which cause the processor 15 to activate the communications receiver 19 for a predetermined period of time after the fish bite alarm 10 is switched-on, following which the communications receiver 19 is powered-down. The predetermined period of time preferably is relatively short. For instance, the predetermined period of time can be 15 seconds, 30 seconds, 60 seconds or 120 seconds. The value for the predetermined period of time determines a period in which the fish bite alarm 10 can be provided with sound data. This feature of the fish bite alarm 10 results in the communications receiver 19 consuming power for only a short period of time, and prevents it from consuming power when the fish bite alarm 10 is operating only to provide an alarm on detection of a fish bite. If the user wishes to provide the fish bite alarm with sound data at a time after the predetermined period of time has elapsed, the user needs only to switch the fish bite alarm 10 off then on again.

When the communications receiver 19 is activated, the fish bite alarm 10 is able to receive alarm message data. The nature of this data depends on the nature of the communications receiver 19, amongst other things.

In the main embodiments of the invention, the communications receiver 19 is an infra-red receiver. Alternatively, the communications receiver may be an infrared transceiver, a USB port, a Bluetooth ^{TM} transceiver or any other suitable receiver. A short-range receiver is appropriate, unless remote operation is required. The application program data includes instructions by which the processor 15 is able to operate the communications receiver 19 and receive data therefrom before writing that data or data derived therefrom as sound data in the sound data storage volume 23 of the memory 16.

To give an example, a user has stored on their mobile telephone a number of ringtones. Such may have been present on the mobile telephone when purchased, or may have subsequently been added, through WAP or SMS for instance. The ringtones may be written in Ringing Tone Text Transfer Language (RTTTL). The ringtones may be of any type, for instance conventional, polyphonic, mp3 or realtone. This allows the processor and the application program data to be constructed from pre-existing mobile telephone technology, modified as required.

This also allows a ringtone to be transferred directly from a user's mobile telephone to the fish bite alarm 10. In this case, the ringtone constitutes an item of alarm message data. For instance, depending on the model of mobile phone, the user may through a menu system select a ringtone and select an option to send the ringtone to another device. Normally, the other device would be another mobile phone, but in this case it is the fish bite alarm 10. As long as the predetermined time has not passed, so the communications receiver 19 remains switched-on, the ringtone is received at the processor 15 through the communications receiver 19. On receiving the ringtone, the processor 15 modifies it as required (although no modification may be necessary), and stores the result in the sound data storage volume 23 of the memory 16 as sound data.

Depending on what communication protocol is used to communicate the ringtone from the mobile phone to the fish bite alarm 10, the processor 15 may arrange for acknowledgment of receipt of the ringtone to be sent to the mobile phone. Of course, if the communication protocol used is one which requires an active link, e.g. as is required with Bluetooth^{TM} transceivers, then bi-directional communication necessarily will occur before the ringtone can be sent to the fish bite alarm 10.

In some embodiments, the processor 16 is arranged to be able properly to process all types of ringtone, including realtone and mp3 ringtones. However, since such can require relatively complicated, and thus expensive, components for the processor 15, the alarm driver 20 and the audible alarm indicator 21, other embodiments of the invention are not provided with such capability. Such embodiments involve simpler devices which are operable for instance to handle conventional ringtones, and maybe also polyphonic ringtones. This can make the fish bite alarm 10 less expensive to manufacture, but also provides the possibility that a received ringtone will not be able to be handled properly by the fish bite alarm 10. The fish bite alarm 10 may include any suitable provision for preventing from being written to the memory 16 ringtones and other audio sequences which the alarm 10 is not able to handle properly.

The alarm message data may be data other than a ringtone, such as a data file of any suitable form, for instance a '.wav', '.mp3' etc. All that is required in such a case is for the processor 15 to be able to handle such data formats for data stored in the memory 16, or alternatively to be able to convert such data formats into a form that the processor 15 can handle and to store the converted data in the memory 16.

A user can load sound data onto the fish bite alarm 10 using a device such as their mobile phone, personal digital assistant (PDA) or personal computer (PC), for instance. In any of these cases, the ringtone or other alarm message data may be the same as or derived from an audio sequence pre-existing on that device or downloaded specifically, for instance from a website or a wapsite

Optionally, the fish bite alarm 10 is arranged so that when it receives an item of alarm message data it stores it in the memory 16 and quickly operates the audible alarm indicator to generate an audio alarm using the sound data stored in the memory 16. This allows a user to determine that the alarm message data has been correctly received by the fish bite alarm 10 and is able to be properly handled thereby. This can be achieved without requiring the presence of a display of output transducer other than the audible alarm indicator. The user can infer from the absence of any audible alarm that the ringtone was not correctly received or its format is unsupported. Alternatively, the processor 15 may cause a short beep or similar to be produced when a received ringtone is in an unsupported format.

Advantageously, the processor 16 is arranged such that only one ringtone or other sound data item can be stored in the sound data storage volume 23 of the memory 16 as sound data at any time. Accordingly, when an item of alarm message data is received, the sound data generated from this overwrites the existing sound data. Instead of overwriting the sound data, the processor may instead delete the existing sound data then write the new sound data into the now blank sound data storage volume 23 of the memory 16 as sound data. Since this allows only one item of sound data to be stored in the memory 16 at a given time, the fish bite alarm 10 does not require any means allowing a user to select between plural sound data items stored in the memory. Since the provision of such selection means would normally involve a control input and an output, e.g. a display, allowing only a single item of sound data can result in fewer components being required, and thus lower manufacturing costs. Allowing only a single item of sound data to be stored in the memory also can allow the memory to be of a relatively small size, and thus relatively inexpensive to manufacture.

Instead of this, the fish bite alarm 10 may be arranged to store plural ringtones at a time. In this case, the fish bite alarm 10 may include means allowing a user to select which ringtone is played when a fish bite is detected, or alternatively may play different ringtones on different fish bite detections, for instance by cycling through the stored ringtones in sequence. For instance, up to five ringtones or other sound data item can be stored at any one time.

Preferably the fish bite alarm 10 is absent of any alarm tone control. Thus, tone properties of the audio alarm are determined only by the sound data stored in the sound data storage volume 23 of the memory 16 (albeit with a minimal difference produced by clock frequency variations). In this way, the fish bite alarm does not need to be provided with controls through which a user can adjust the tone of the audio alarm. Since the ability to provide the fish bite alarm 10 with ringtones increases significantly the number of possible very differently sounding audio alarms, in most instances the audio alarm emanating can be distinguished easily from others even without requiring a tone control to be provided on the bite alarm. The absence of the tone control can result in reduced manufacturing costs, and in a reduced number of mechanical components (e.g. a switch). Since mechanical components are more prone than electronic components to failure with repeated use, the absence of a tone control can result in an increased average time-to-failure.

Furthermore, it is preferable that the fish bite alarm is absent of an alarm volume control. In this way, significant properties of the audio alarm are determined only by the sound data stored in the memory 16. Omitting a volume control from the fish bite alarm 10 reduces further the count of mechanical components, thereby further increasing the average time-to-failure and reducing manufacturing cost.

An additional embodiment of the invention is responsive to detection of a fish bite for operating an audible alarm indicator to generate an audio alarm using sound data stored in a memory, and also has an additional, non-programmable alarm such as is found on conventional fish bite alarms. In this case, the additional alarm may have associated with it tome and/or volume controls. Any such volume control may also effect adjustment of the audio alarm generated using sound data stored in the memory.

Whilst the invention has been described with reference to certain embodiments, it will be appreciated that these are not intended to be limiting on the scope of protection, which is defined only by the appended claims.

## Claims

1. A fish bite alarm comprising:
a fish bite detector operable to produce a fish bite detection signal when a fish bite is detected; and
an audible alarm indicator;
the fish bite alarm being **characterised by**:
a memory;
a communications receiver, for receiving alarm message data;
means for storing in the memory sound data the same as or derived from the alarm message data; and
means responsive to production of the fish bite detection signal for operating the audible alarm indicator to generate an audio alarm using the sound data stored in the memory.

2. A fish bite alarm as claimed in claim 1, wherein the means for storing in the memory is operable in response to alarm message data being received to overwrite or delete alarm message data pre-existing in the memory.

3. A fish bite alarm as claimed in claim 1 or claim 2, wherein properties of the audio alarm are determined only by the sound data stored in the memory.

4. A fish bite alarm as claimed in any preceding claim, wherein the audible alarm indicator is the sole output transducer of the fish bite alarm.

5. A fish bite alarm as claimed in any preceding claim, wherein tone properties of the audio alarm are determined only by the sound data stored in the memory

6. A fish bite alarm as claimed in any preceding claim, wherein the fish bite alarm is responsive to receiving alarm message data for operating the audible alarm indicator to generate an audio alarm using the sound data stored in the memory.

7. A fish bite alarm as claimed in any preceding claim, wherein the communications receiver is arranged to be operated only for a predetermined duration following the fish bite alarm being switched-on.
